# EUROPÄISCHE PATENTSCHRIFT

(11) **EP 2 053 923 B1**
(45) Veröffentlichungstag und Bekanntmachung des Hinweises auf die Patenterteilung: **17.10.2012**
(21) Anmeldenummer: 07801842.1
(22) Anmeldetag: 15.08.2007
(51) Int. Cl.: A22C 21/00

(54) **HALTEVORRICHTUNG ZUR HALTERUNG VON ENTWEIDETEN GEFLÜGELKÖRPERN ODER TEILEN DAVON**
HOLDING DEVICE FOR SECURING EVISCERATED POULTRY CARCASSES OR PARTS THEREOF
DISPOSITIF DE MAINTIEN DESTINÉ À MAINTENIR DES VOLAILLES DÉPLUMÉES OU DES PARTIES DE CELLES-CI

(30) Priorität: 25.08.2006 DE 102006040454
(43) Veröffentlichungstag der Anmeldung: 06.05.2009
(73) Patentinhaber: Nordischer Maschinenbau Rud. Baader GmbH + Co. KG, 23560 Lübeck (DE)
(72) Erfinder: EVERS, Reinhard, 23617 Stockelsdorf (DE)
(74) Vertreter: Stork Bamberger
(86) Internationale Anmeldenummer: PCT/EP2007/007414
(87) Internationale Veröffentlichungsnummer: WO 2008/022787

(56) Entgegenhaltungen:
- EP-A- 0 118 963
- EP-A- 0 401 528
- EP-A- 1 541 030
- US-A- 4 780 930
- US-A- 5 697 873

## Beschreibung

Die Erfindung betrifft eine Haltevorrichtung zur Halterung von entweideten Geflügelkörpern oder Teilen davon als Bearbeitungsgut während der Bearbeitung desselben, umfassend einen Stützkörper zur Aufnahme des Bearbeitungsguts und eine Klemmvorrichtung mit mindestens einem gegen den Stützkörper bewegbaren Klemmhebel zum Fixieren des Bearbeitungsguts auf dem Stützkörper, wobei die Klemmvorrichtung derart steuerbar ausgebildet ist, dass der Klemmhebel aus einer Warteposition in eine Klemmposition und umgekehrt bringbar ist.

Solche Haltevorrichtungen sind üblicherweise Bestandteil einer Anlage zur Be- und Verarbeitung von Tierkörpern bzw. Tierkörperteilen und kommen insbesondere in der Geflügelverarbeitung zum Einsatz. Dabei werden entweidete Geflügelkörper, Teile von Geflügelkörpem, wie z.B. Vorderhälften oder dergleichen als Bearbeitungsgut in einem so genannten Beschickungsbereich auf eine oben genannte Haltevorrichtung bzw. genauer auf einen Stützkörper der Haltevorrichtung aufgesetzt. Mehrere solcher Haltevorrichtungen sind einem umlaufenden Förderer zugeordnet. Mittels des Förderers werden die Haltevorrichtungen und damit das Bearbeitungsgut von Bearbeitungsstation zu Bearbeitungsstation transportiert. Vorzugsweise eine der Bearbeitungsstationen ist als Messstation ausgebildet und umfasst ein Messmittel, das zur Erfassung von spezifischen Daten (also u.a. Größe, Geometrie, Lage etc.) ausgebildet ist. Besonders eignen sich die beiden (Schulter-)Gelenkpunkte des Geflügelkörpers als Messpunkte, die in Transportrichtung des Förderers nach vorne gerichtet und beispielsweise durch zwei Messfahnen detektierbar sind.

Nach dem Beschicken der Haltevorrichtung mit dem Bearbeitungsgut erfolgt die Klemmung desselben, um eine sichere und zuverlässige Halterung während des Transports sowie während der Bearbeitungsschritte sicher zu stellen. Die Klemmung wird durch eine Klemmvorrichtung, die Bestandteil der Haltevorrichtung ist, erreicht. Dazu weist die Klemmvorrichtung mindestens einen gegen den Stützkörper bewegbaren Klemmhebel auf. In diesem Zusammenhang bedeutet gegen die Stützvorrichtung nicht zwangsläufig, dass direkter Kontakt zwischen dem Klemmhebel und dem Stützkörper besteht. Vielmehr kommt es darauf an, dass der Klemmhebel derart in Richtung des Stützkörpers bewegbar ist, dass das Bearbeitungsgut, am Beispiels eine Huhnes das Brustbein desselben, zwischen dem Klemmhebel und dem Stützkörper eingeklemmt, also fixiert ist.

Aus der EP 0 401 528 B 1 der Anmelderin beispielsweise ist eine Haltevorrichtung mit den oben genannten, gattungsbildenden Merkmalen und der beschriebenen Funktionsweise bekannt. Im praktischen Einsatz derartiger Haltevorrichtungen hat sich aber insbesondere bei der Bearbeitung von Vorderhälften von Geflügelkörpern mit oder ohne Flügeln gezeigt, dass Teile des Geflügelkörpers, üblicherweise nämlich der Hals des Geflügels oder Teile des Halses sowie möglicherweise Halswirbelsäulenteile im Bereich der als Messpunkte dienenden (Schulter-)Gelenke des Geflügelkörpers liegen. Genauer hängt der Hals seitlich vor den Gelenkpunkten und/oder ist derart breit ausgebildet, dass der Hals bzw. Halsteile genau in dem Bereich liegen, in dem die Messfahnen die (Schulter-)Gelenke treffen/berühren sollen. Stößt die Haltevorrichtung mit dem Geflügelkörper dann gegen entsprechende Messmittel, beispielsweise gegen zwei Messfahnen, die parallel nebeneinander oder in Transportrichtung versetzt zueinander liegen können, erfassen die Messfahnen im ersten Kontakt den Hals und nicht die eigentlichen Messpunkte, nämlich die Gelenkpunkte. Dadurch, dass der Hals bzw. Halsteile den Messpunkt bilden, entsteht ein falsches Bild vom Bearbeitungsgut. Anders ausgedrückt werden die Messdaten verfälscht, so dass nachgeordnete Bearbeitungswerkzeuge, beispielsweise Kreismesser oder dergleichen, auf der Basis falscher Messdaten angesteuert werden, was wiederum zu Fehlschnitten führt. Im Ergebnis sind die Endprodukte von minderer Qualität und die Ausbeute ist reduziert. Es ist daher Aufgabe der vorliegenden Erfindung, eine leicht handhabbare Haltevorrichtung zu schaffen, die eine verbesserte Messung der Gelenkpunkte des zu bearbeitenden Bearbeitungsguts ermöglicht.

Diese Aufgabe wird durch eine Haltevorrichtung mit den eingangs erwähnten Merkmalen dadurch gelöst, dass gemäß Anspruch 1 an der Haltevorrichtung ein Stützelement angeordnet ist, das zum Stützen von in Transportrichtung T der Haltevorrichtung über die Haltevorrichtung hinaus ragenden Teilen des Bearbeitungsguts in der Klemmposition derart ausgebildet und angeordnet ist, dass ein oder mehrere Messpunkte am Bearbeitungsgut für ein Messmittel frei zugänglich sind. Damit wird auf einfache und zuverlässige Weise sichergestellt, dass sämtliche Teile, insbesondere auch der Hals bzw. Halsreste des Geflügelkörpers, von dem Bereich der Gelenkpunkte fern gehalten werden, so dass Messelemente ausnahmslos an den Gelenkpunkten angreifen können. Mit anderen Worten werden der Hals oder Teile davon soweit angehoben bzw. in angehobener Stellung gehalten, dass der Hals oder Teile davon das Messmittel nicht mehr berühren können. Die (Schulter-)Gelenke treffen ungehindert auf das Messmittel, so dass eine präzise Messung erfolgt. Im Ergebnis werden gleichmäßige Schnittergebnisse erzielt. Des Weiteren ist der Knochenanteil im Endprodukt reduziert und die Ausbeute ist erhöht.

Vorzugsweise ist das Stützelement in Wirkverbindung mit dem Betätigungsmechanismus für den oder jeden Klemmhebel. Damit kann auf effektive sichergestellt werden, dass die Bedienung des Klemmhebels einerseits und des Stützelementes andererseits auf besonders einfache Weise synchronisiert ausgeübt werden kann.

In einer zweckmäßigen Weiterbildung der Erfindung ist das Stützelement an dem Betätigungsmechanismus für den Klemmhebel im Bereich des Klemmhebels befestigt. Dadurch wird zum einen die Handhabung erleichtert und zum anderen kann durch die mechanische Kopplung von Klemmhebel und Stützelement eine zuverlässige Funktion sicherstellt.

Vorteilhafterweise ist das Stützelement derart angeordnet und ausgebildet, dass es in der Warteposition innerhalb der Haltevorrichtung und in der Klemmposition außerhalb der Haltevorrichtung liegt, so dass es in der Klemmposition eine über die Haltevorrichtung hinaus ragende Verlängerung der Lenkerstange bildet. Damit kann die Beschickung aufgrund der zurückgezogenen Warteposition besonders einfach realisiert werden. Des Weiteren schafft die über die Haltevorrichtung hinaus ragende Position des Stützelementes in der Klemmposition eine ideale Auflagefläche für Teile des Bearbeitungsguts, die über die Haltevorrichtung hinaus ragen.

Besonders zweckmäßig ist eine Ausgestaltung, in der die dem über die Haltevorrichtung hinausragenden Bearbeitungsgut zugewandte Auflagefläche vollständig eben ausgebildet ist. Dadurch ist eine besonders zuverlässige Stützung des Bearbeitungsguts, insbesondere des Halses oder dergleichen, gewährleistet.

Weitere zweckmäßige oder vorteilhafte Merkmale und Ausführungsformen ergeben sich aus den Unteransprüchen und der Beschreibung. Eine besonders bevorzugte Ausführungsform wird anhand der beigefügten Zeichnung näher erläutert. In der Zeichnung zeigt:
- Fig. 1: eine Seitenansicht einer Haltevorrichtung in Klemmposition ohne Bearbeitungsgut,
- Fig. 2: eine Seitenansicht der Klemmvorrichtung der Haltevorrichtung gemäß Figur 1 in Warteposition,
- Fig. 3: eine Vorderansicht der Klemmvorrichtung gemäß Figur 2,
- Fig. 4: eine Seitenansicht der Klemmvorrichtung der Haltevorrichtung gemäß Figur 1 in Klemmposition,
- Fig. 5: eine Seitenansicht des an einem Betätigungselement für den Klemmhebel befestigten Stützelementes,
- Fig. 6: eine Draufsicht auf das Stützelement gemäß Figur 5,
- Fig. 7: eine Seitenansicht der Haltevorrichtung gemäß Figur 1 in Überkopf-Position mit Teilen eines Geflügelskelettes sowie einem an Schultergelenken anliegenden Messmittel,
- Fig. 8: eine Vorderansicht der Haltevorrichtung gemäß Figur 7,
- Fig. 9: eine Ansicht von oben auf die Haltevorrichtung gemäß und in der Position der Figur 7,
- Fig. 10: eine Seitenansicht auf eine weitere Ausführungsform des Stützelementes, und
- Fig. 11: eine Draufsicht auf das Stützelement gemäß Figur 10.

Die in den Figuren gezeigten Haltevorrichtungen dienen zum Halten von entweideten Geflügelkörpern oder Teilen davon, wobei auch das Halten von anderen Bearbeitungsgütern mit vergleichbaren Eigenschaften und Abmessungen grundsätzlich möglich ist.

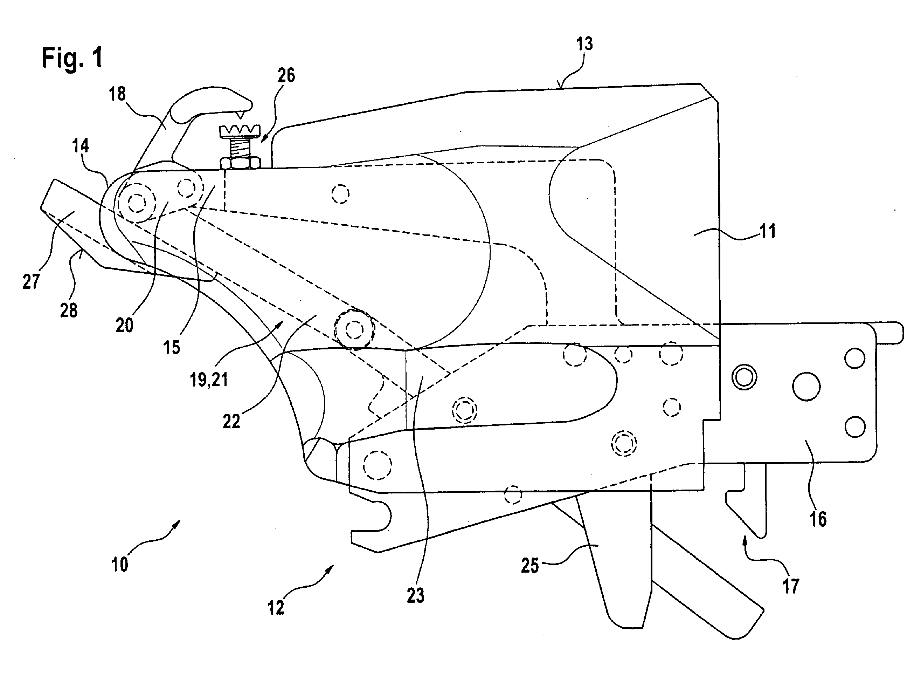

Die in der Figur 1 dargestellte Haltevorrichtung 10, die vom Grundprinzip im Übrigen auch sehr ausführlich in der EP 0 401 528 B1 der Anmelderin beschrieben wird und auf deren Beschreibung an dieser Stelle verwiesen wird, umfasst einen Stützkörper 11 und eine Klemmvorrichtung 12. Der Stützkörper 11 und die Klemmvorrichtung 12 bilden eine Einheit, wobei der Stützkörper 11 insbesondere aus hygienischen Gründen bzw. Anforderungen lösbar mit der Klemmvorrichtung 12 verbunden ist.

Der Stützkörper 11 selbst ist vorzugsweise aus einem Kunststoff gefertigt. Andere in der Lebensmittelverarbeitung zugelassene Materialien sind ebenfalls einsetzbar. Der Stützkörper 11 weist die Form eines Sattels auf und ist mit einer Stützfläche 13 zur Auflage des Bearbeitungsguts sowie einem in Transportrichtung T nach vorne weisenden Sattelhorn 14 ausgebildet. Auf der der Klemmvorrichtung 12 zugewandten Seite ist der Stützkörper 11 zur Aufnahme der Klemmvorrichtung 12 im Wesentlichen U-förmig ausgebildet.

Die Klemmvorrichtung 12 ist in der beschriebenen Ausführung aus einem korrosionsbeständigen Metall gebildet. Andere Materialien, die entsprechende Eigenschaften insbesondere in Bezug auf Korrosionsbeständigkeit und Lebensmitteltauglichkeit aufweisen, sind auch möglich. Die Klemmvorrichtung 12 umfasst ein Tragelement 15, auf das der Stützkörper 11 aufgesetzt wird. Das Tragelement 15 ist seinerseits an einem Verbindungselement 16 befestigt. Das Verbindungselement 16 dient zum einen zum Abstützen des Tragelementes 15 und zum anderen der Verbindung der Haltevorrichtung 10 mit einem nicht dargestellten Förderelement. Hierzu weist das Verbindungselement 16 übliche Schnellverschlusselemente 17, wie z.B. einen Bajonett-Verschluss, auf. Weiterhin ist ein Klemmhebel 18 mit einem Betätigungsmechanismus 19 Bestandteil der Klemmvorrichtung 12.

Der Klemmhebel 18 ist im Bereich des Sattelhoms 14 des Stützkörpers 11 an dem Tragelement 15 schwenkbar um eine Achse D befestigt. Dabei ist der Klemmhebel 18, möglich sind auch mehrere Klemmhebel, an einem Kurbelhebel 20 angeordnet. Mit anderen Worten ist der Kurbelhebel 20, an dem mindestens ein Klemmhebel 18 angeordnet ist bzw. der einstückig mit dem Kurbelhebel 20 ausgebildet ist, schwenkbar um die Achse D ausgebildet bzw. angeordnet. Der Kurbelhebel 20 und damit auch der oder jeder Klemmhebel 18 ist mit dem Betätigungsmechanismus 19 in Wirkverbindung. Genauer ist der Betätigungsmechanismus 19 in der gezeigten Ausführung ein Kniehebelmechanismus 21.

Der Kniehebelmechanismus 21 weist eine Lenkerstange 22, die an einem Ende gelenkig an dem Kurbelhebel 20 und an dem anderen Ende gelenkig an einem Betätigungshebel 23 angeordnet ist, auf. Der mindestens teilweise doppelarmig ausgebildete Betätigungshebel 23 ist an dem Verbindungselement 16 im Bereich einer Achse S schwenkbar gelagert und ragt mit dem der Lenkerstange 22 gegenüberliegende Ende nach unten aus dem Verbindungselement 16 heraus. Die gelenkigen Verbindungen zwischen dem Kurbelhebel 20 und der Lenkerstange 22 einerseits und der Lenkerstange 22 und dem Betätigungshebel 23 andererseits sind zu der Achse S des Betätigungshebels 23 am Verbindungselement 16 derart ausgebildet und angeordnet, dass sie in Klemmposition des Klemmhebels 18 eine Streckstellung, in der die genannten gelenkigen Verbindungen auf einer Verbindungsgeraden liegen, leicht überschreiten. Dabei sichert ein Federelement 24, das an einem Ende am Verbindungselement 16 angeordnet und mit dem anderen Ende an der Verbindungsstelle zwischen der Lenkerstange 22 und dem Betätigungshebel 23 befestigt ist, sowohl die Klemmposition als auch eine Warteposition, in der die Klemmvorrichtung 12 in geöffneter Stellung ist.

Zusätzlich ist dem Verbindungselement 16 ein Winkelhebel 25 zugeordnet, der mit einem freien Ende in Wirkverbindung mit dem Betätigungshebel 23 bringbar ist und mit dem anderen freien Ende nach unten aus dem Verbindungselement 16 heraus ragt. Der Winkelhebel 25 ist um eine Achse W an dem Verbindungselement 16 schwenkbar angeordnet. Im Bereich des Tragelementes 15, genauer auf der Stützfläche 13 desselben, ist optional ein Anschlagelement 26 vorgesehen. Das Anschlagelement 26 kann ein feststehender Bolzen aber auch ein gegen ein nicht gezeigtes Federelement in das Tragelement 15 eindrückbares Element sein. Mit anderen Worten kann eine Klemmwirkung des Bearbeitungsgutes entweder zwischen dem Klemmhebel 18 und dem Tragelement 15 oder dem Klemmhebel 18 und dem Anschlagelement 26 erzeugt werden. Auch eine Klemmwirkung zwischen dem Klemmhebel 18 und dem Stützkörper 11 ist möglich. Dabei kann der Klemmhebel 18 in der Klemmposition direkt in Kontakt mit einem Gegenlager, also dem Tragelement 15 oder dem Anschlagelement 26 oder dem Stützkörper 11 oder mit einem Abstand zum Gegenlager sein.

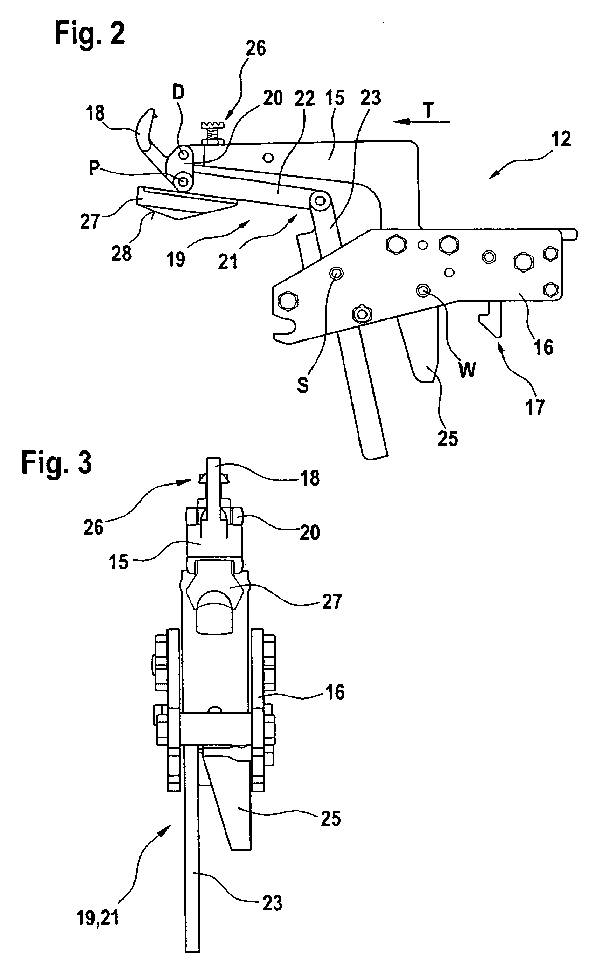

Der Haltevorrichtung 10 ist des Weiteren ein Stützelement 27 zugeordnet. Das Stützelement 27 ist ein schuhartiges Element, das im Bereich des Klemmhebels 18 angeordnet ist. Genauer ist das Stützelement 27 an der Lenkstange 22 des Kniehebelmechanismus 21 angeordnet und befestigt. Dabei ragt das Stützelement 27 in Transportrichtung T über die Lenkerstange 22 hinaus (siehe insbesondere Figuren 2; 4 und 5).Anders ausgedrückt bildet das Stützelement 27 eine Art Verlängerung der Lenkerstange 22 über den gelenkigen Anlenkpunkt P zwischen Lenkerstange 22 und Kurbelhebel 20 hinaus. Die Breite des Stützelementes 27 ist derart ausgewählt bzw. ausgebildet, dass sie schmaler ist, als der kleinste Abstand zwischen zwei Messpunkten, die durch die Schultergelenke des Bearbeitungsguts definiert werden. Bevorzugt ist die Breite des Stützelementes 27 jedoch maximal so breit, wie es der Abstand der Messpunkte gerade noch zulässt. Die Breite des Abstützelementes 27 kann auch durch den Abstand zwischen den beiden beabstandeten Seiten des Sattelhorns 14 begrenzt sein. In Bezug auf das weiter unten beschriebene Messmittel ist die Breite des Stützelementes 27 geringer als der kleinste Abstand zwischen zwei Messfahnen des Messmittels bzw. so breit, wie es der Abstand der Messfahnen gerade noch zulässt.

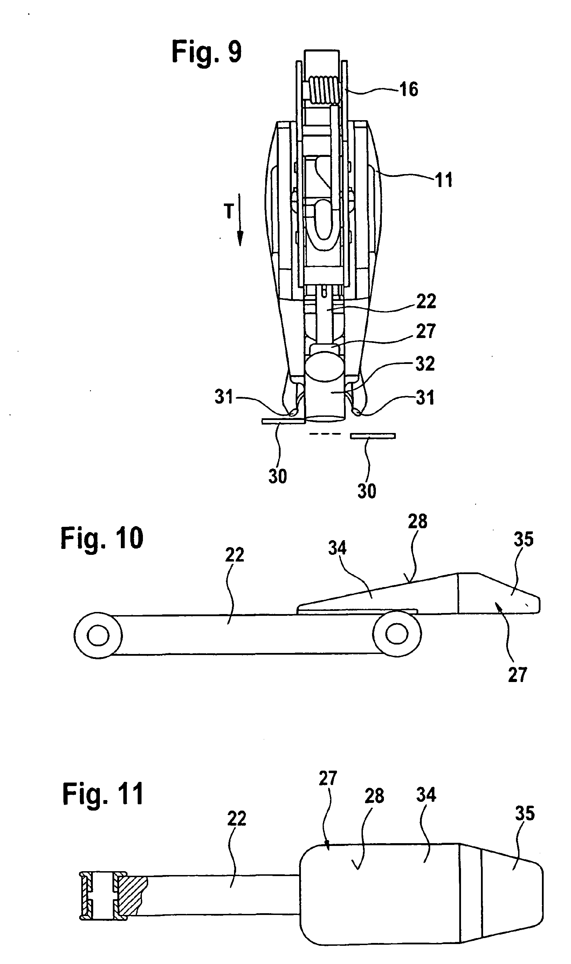

Das Stützelement 27 verfügt über eine Auflagefläche 28, die sich auf der der Lenkerstange 22 abgewandten Seite des Stützelementes 27 befindet. Diese Auflagefläche 28 für in Transportrichtung T über die Haltevorrichtung 10 bzw. genauer über das Sattelhorn 14 des Stützkörpers 11 hinaus ragende Teile des Bearbeitungsguts, also insbesondere für einen Halsabschnitt und/oder Halswirbelsäulenabschnitte eines Huhns, kann optional eine Führung 29 aufweisen, die eine definierte Aufnahme/Halterung des Halsabschnittes/der Halswirbelsäulenabschnitte gewährleistet. Vorzugsweise ist die dem Bearbeitungsgut, also z.B. dem Hals zugewandte Auflagefläche 28 jedoch vollständig eben ausgebildet (siehe z.B. Figuren 10 und 11). In der in den Figuren 10 und 11 dargestellten Ausführung ist das Stützelement 27 in der Seitenansicht etwa dreieckförmig ausgebildet. Die Auflagefläche 28 wird in Klemmposition vorzugsweise durch den längeren Schenkel 34 des Stützelementes 27 gebildet. Der kürzere Schenkel 35 dient üblicherweise als Hilfselement bei der Beschickung des Bearbeitungsguts auf die Haltevorrichtung 10. Die Form des Stützelementes 27 kann jedoch auch variieren und in der Seitenansicht rechteckig, mehreckig oder anderweitig ausgebildet sein.

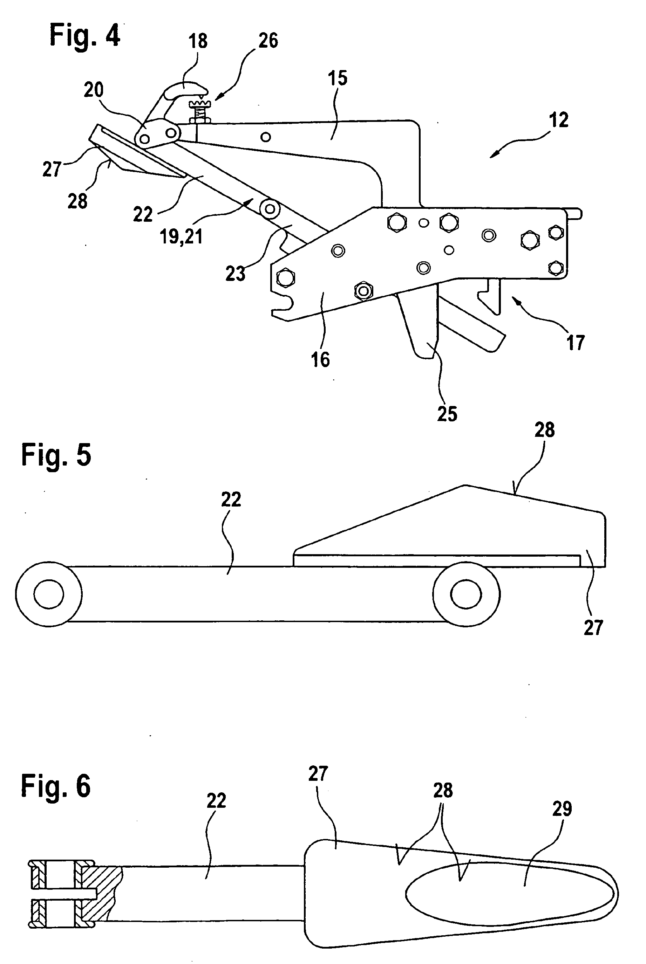

Das Stützelement 27 ist in der Warteposition des Klemmhebels 18 in einer unteren, zurückgezogenen Position, derart, dass es in Transportrichtung T vorzugsweise hinter dem in Warteposition befindlichen Klemmhebel 18 liegt (siehe Figur 2) bzw. bündig mit diesem abschließt. Selbstverständlich kann das Stützelement 27 aber auch in Transportrichtung T über den Klemmhebel 18 hinaus ragen. Wird der Klemmhebel 18 aus der Warteposition (siehe Figur 2), die der Aufnahme- bzw. Beschickungsposition für die Haltevorrichtung 10 entspricht, in die Klemmposition (siehe Figur 4) bewegt, bewegt sich das Stützelement 27 aufgrund der Wirkverbindung mit dem Kniehebelmechanismus 21 und genauer mit der Lenkerstange 22 in Transportrichtung T nach vorne und nach oben, so dass es in der Klemmposition des Klemmhebels 18 über die Haltevorrichtung 10 hinaus und genauer gegenüber dem in Transportrichtung T vordersten Teil der Haltevorrichtung 10, nämlich dem Kurbelhebel 20, hervor steht.

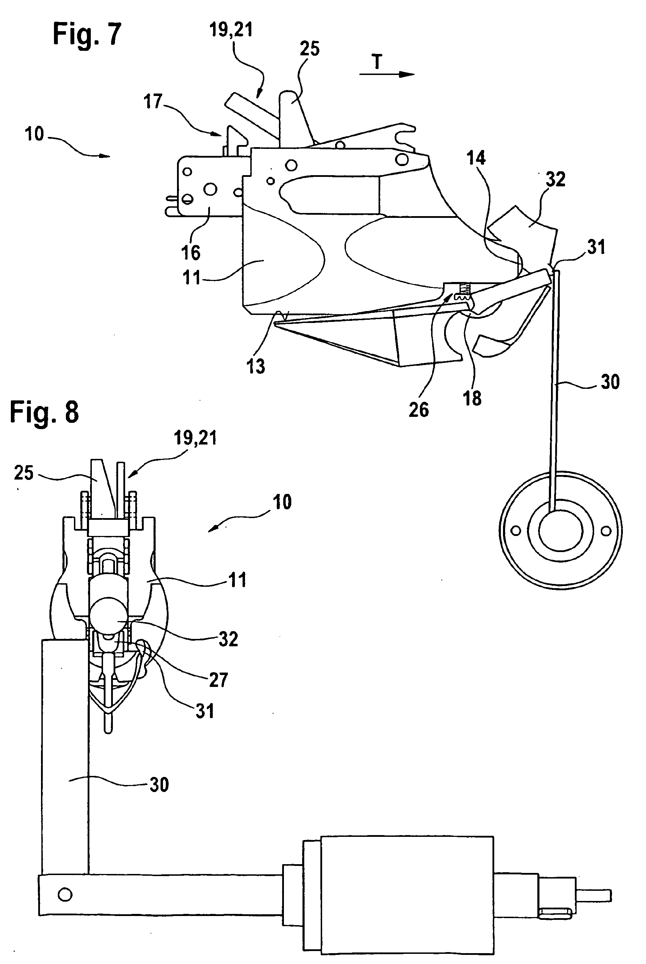

Das Stützelement 27 bildet somit eine Auflage für in Transportrichtung T der Haltevorrichtung 10 über die Haltevorrichtung 10 hinaus ragende Teile des Bearbeitungsguts in der Klemmposition. Dazu ist das Stützelement 27 derart ausgebildet und angeordnet, dass ein oder mehrere Messpunkte am Bearbeitungsgut für ein Messmittel frei zugänglich sind. Zum besseren Verständnis zeigen die Figuren 7 bis 9 noch einmal die Haltevorrichtung 10 mit ausgewählten (nicht vollständigen) Skelettteilen eine Huhns. In den Figuren 7 und 8 ist die Haltevorrichtung 10 in Überkopf-Position dargestellt, da das (nicht gezeigte) Förderelement, an dem die Haltevorrichtungen 10 lösbar befestigt sind, endlos umlaufend ist. Im Bereich eines unteren Trums des Förderelementes ist das Messmittel angeordnet, gegen das das Bearbeitungsgut gefördert wird. Im beschriebenen Beispiels umfasst das Messmittel zwei Messfahnen 30, von denen eine Messfahne 30 dargestellt ist. Die Messfahnen 30 können nebeneinander oder, wie es bevorzugt ist (siehe z.B. Figur 9), auch in Transportvorrichtung T versetzt zueinander liegen. Das Bearbeitungsgut wird durch das Fördern der Haltevorrichtung 10 in Transportrichtung T gegen die Messfahnen 30 bewegt, wobei das Bearbeitungsgut mit seinen (Schulter-)Gelenken 31 auf die Messfahnen 30 trifft. Der Hals 32 bzw. Halsteile und/oder Halswirbelsäulenteile liegen während der Messwertaufnahme auf dem Stützelement 27 auf. Mit anderen Worten sorgt das Stützelement 27 dafür, dass der Hals 32 mindestens während der Messung angehoben ist und außerhalb des Bereichs der Schultergelenke 31 liegt, so dass die Messpunkte, also die Schultergelenke 31 für die Messfahnen 30 frei zugänglich sind.

## Patentansprüche

1. Haltevorrichtung (10) zur Halterung von entweideten Geflügelkörpern oder Teilen davon als Bearbeitungsgut während der Bearbeitung desselben, umfassend einen Stützkörper (11) zur Aufnahme des Bearbeitungsguts und eine Klemmvorrichtung (12) mit mindestens einem gegen den Stützkörper (11) bewegbaren Klemmhebel (18) zum Fixieren des Bearbeitungsguts auf dem Stützkörper (11), wobei die Klemmvorrichtung (12) derart steuerbar ausgebildet ist, dass der Klemmhebel (18) aus einer Warteposition in eine Klemmposition und umgekehrt bringbar ist, **dadurch gekennzeichnet, dass** an der Haltevorrichtung (10) ein Stützelement (27) an geordnet ist, das zum Stützen von in Transportrichtung T der Haltevorrichtung (10) über die Haltevorrichtung (10) hinaus ragenden Teilen des Bearbeitungsguts in der Klemmposition derart ausgebildet und angeordnet ist, dass ein oder mehrere Messpunkte an dem Teil des Bearbeitungsguts welches nicht vom Stützelement gestützt wird für ein Messmittel frei zugänglich sind.

2. Haltevorrichtung nach Anspruch 1, **dadurch gekennzeichnet, dass** das Stützelement (27) derart an der Haltevorrichtung (10) ausgebildet und angeordnet ist, dass Schultergelenke (31) eines Geflügelkörpers für zwei Messfahnen (30) des Messmittels frei zugänglich sind.

3. Haltevorrichtung nach Anspruch 1 oder 2, **dadurch gekennzeichnet, dass** das Stützelement (27) in Wirkverbindung mit einem Betätigungsmechanismus (19) für den oder jeden Klemmhebel (18) steht.

4. Haltevorrichtung nach Anspruch 3, **dadurch gekennzeichnet, dass** das Stützelement (27) an dem Betätigungsmechanismus (19) für den Klemmhebel (18) im Bereich des Klemmhebels (18) befestigt ist.

5. Haltevorrichtung nach Anspruch 3 oder 4, **dadurch gekennzeichnet, dass** der Betätigungsmechanismus (19) ein Kniehebelmechanismus (21) ist, der eine Lenkerstange (22) und einen Betätigungshebel (23) umfasst.

6. Haltevorrichtung nach Anspruch 5, **dadurch gekennzeichnet, dass** das Stützelement (27) an der Lenkerstange (22) angeordnet ist.

7. Haltevorrichtung nach Anspruch 5 oder 6, **dadurch gekennzeichnet, dass** das Stützelement (27) derart angeordnet und ausgebildet ist, dass es in der Warteposition innerhalb der Haltevorrichtung (10) und in der Klemmposition außerhalb der Haltevorrichtung (10) liegt, so dass es in der Klemmposition eine über die Haltevorrichtung (10) hinaus ragende Verlängerung der Lenkerstange (22) bildet.

8. Haltevorrichtung nach einem der Ansprüche 1 bis 7, **dadurch gekennzeichnet, dass** die Breite des Stützelementes (27) gleich oder kleiner ist als der kleinste Abstand zweier Messfahnen (30) des Messmittels.

9. Haltevorrichtung nach einem der Ansprüche 5 bis 8, **dadurch gekennzeichnet, dass** das Stützelement (27) auf der der Lenkerstange (22) gegenüberliegenden Seite eine Auflagefläche (28) für den Hals/Halsteile/Halswirbelsäulenteile bildet.

10. Haltevorrichtung nach Anspruch 9, **dadurch gekennzeichnet, dass** die dem über die Haltevorrichtung hinaus ragende Bearbeitungsgut zugewandte Auflagefläche (28) vollständig eben ausgebildet ist.

11. Haltevorrichtung nach Anspruch 9, **dadurch gekennzeichnet, dass** die Auflagefläche (28) eine Führung (29) aufweist.

## Claims

1. Holding apparatus (10) for supporting gutted poultry bodies or parts thereof as material to be processed during processing thereof, including a supporting body (11) for receiving the material to be processed and a clamping apparatus (12) having at least one clamping lever (18) movable against the supporting body (11) for fixing the material to be processed on the supporting body (11), the clamping apparatus (12) being controllable in such a way that the clamping lever (18) can be moved out of a standby position into a clamping position and vice versa, **characterised in that** at the holding apparatus (10) is arranged a supporting element (27) which is designed and arranged for supporting parts of the material which protrude beyond the holding apparatus (10) in the direction of transport T of the holding apparatus (10), in the clamping position in such a way that one or more measuring points on that part of the material to be processed which is not supported by the supporting element are freely accessible to a measuring means.

2. Holding apparatus according to claim 1, **characterised in that** the supporting element (27) is designed and arranged on the holding apparatus (10) in such a way that shoulder joints (31) of a poultry body are freely accessible to two measuring elements (30) of the measuring means.

3. Holding apparatus according to claim 1 or 2, **characterised in that** the supporting element (27) is functionally connected to an actuating mechanism (19) for the or each clamping lever (18).

4. Holding apparatus according to claim 3, **characterised in that** the supporting element (27) is attached to the actuating mechanism (19) for the clamping lever (18) in the region of the clamping lever (18).

5. Holding apparatus according to claim 3 or 4, **characterised in that** the actuating mechanism (19) is a toggle mechanism (21) which comprises a control rod (22) and an actuating lever (23).

6. Holding apparatus according to claim 5, **characterised in that** the supporting element (27) is arranged on the control rod (22).

7. Holding apparatus according to claim 5 or 6, **characterised in that** the supporting element (27) is arranged and designed in such a way that in the standby position it lies within the holding apparatus (10) and in the clamping position it lies outside the holding apparatus (10), so that in the clamping position it forms an extension of the control rod (22) protruding beyond the holding apparatus (10).

8. Holding apparatus according to any one of claims 1 to 7, **characterised in that** the width of the supporting element (27) is equal to or smaller than the shortest distance between two measuring elements (30) of the measuring means.

9. Holding apparatus according to any one of claims 5 to 8, **characterised in that** the supporting element (27) on the side opposite the control rod (22) forms a bearing surface (28) for the neck/neck portions/cervical vertebral column portions.

10. Holding apparatus according to claim 9, **characterised in that** the bearing surface (28) facing towards the material protruding beyond the holding apparatus is completely flat.

11. Holding apparatus according to claim 9, **characterised in that** the bearing surface (28) comprises a guide (29).

## Revendications

1. Dispositif (10) de maintien destiné à maintenir des volailles éviscérées ou des parties de celles-ci pendant leur traitement en tant que produit à traiter, comprenant un corps (11) de soutien destiné à accueillir le produit à traiter et un dispositif (12) de serrage qui présente au moins un levier (18) de serrage pouvant être déplacé contre le corps (11) de soutien pour fixer le produit à traiter sur le corps (11) de soutien, le dispositif (12) de serrage étant conçu de manière à pouvoir être commandé en amenant le levier (18) de serrage depuis une position d'attente jusque dans une position de serrage et inversement,
**caractérisé en ce que** sur le dispositif (10) de maintien est disposé un élément (27) de soutien, conçu et disposé afin de soutenir dans la position de serrage les parties du produit à traiter qui dépassent du dispositif (10) de maintien dans la direction de transport T du dispositif (10) de maintien, de telle sorte qu'un moyen de mesure puisse accéder librement à un ou plusieurs points de mesure situés sur la partie du produit à traiter qui n'est pas soutenue par l'élément de soutien.

2. Dispositif de maintien selon la revendication 1, **caractérisé en ce que** l'élément (27) de soutien est conçu et disposé sur le dispositif (10) de maintien de telle sorte que deux ailettes (30) de mesure du moyen de mesure puissent accéder à des articulations scapulaires (31) d'un corps de volaille.

3. Dispositif de maintien selon la revendication 1 ou 2, **caractérisé en ce que** l'élément (27) de soutien coopère avec le mécanisme (19) d'actionnement du ou de chaque levier (18) de serrage.

4. Dispositif de maintien selon la revendication 3, **caractérisé en ce que** l'élément (27) de soutien est fixé au mécanisme (19) d'actionnement du levier (18) de serrage dans la zone du levier (18) de serrage.

5. Dispositif de maintien selon la revendication 3 ou 4, **caractérisé en ce que** le mécanisme (19) d'actionnement est un mécanisme (21) de genouillère qui comprend une bielle (22) et un levier (23) d'actionnement.

6. Dispositif de maintien selon la revendication 5, **caractérisé en ce que** l'élément (27) de soutien est disposé sur la bielle (22).

7. Dispositif de maintien selon la revendication 5 ou 6, **caractérisé en ce que** l'élément (27) de soutien est conçu et disposé de telle sorte qu'il se trouve à l'intérieur du dispositif (10) de maintien en position d'attente et à l'extérieur du dispositif (10) de maintien en position de serrage, de sorte qu'il forme un prolongement de la bielle (22) dépassant du dispositif (10) de maintien, en position de serrage.

8. Dispositif de maintien selon l'une des revendications 1 à 7, **caractérisé en ce que** la largeur de l'élément (27) de soutien est inférieure ou égale au plus petit écart entre deux ailettes (30) de mesure du moyen de mesure.

9. Dispositif de maintien selon l'une des revendications 5 à 8, **caractérisé en ce que** l'élément (27) de soutien forme une surface (28) d'appui pour le cou/les parties du cou/les parties de la colonne vertébrale sur le côté opposé à la bielle (22).

10. Dispositif de maintien selon la revendication 9, **caractérisé en ce que** la surface (28) d'appui orientée vers le produit à traiter dépassant du dispositif de maintien est entièrement plate.

11. Dispositif de maintien selon la revendication 9, **caractérisé en ce que** la surface (28) d'appui présente un guidage (29).
